# EUROPÄISCHE PATENTANMELDUNG

(11) **EP 0 816 129 A2**
(43) Veröffentlichungstag der Anmeldung: **07.01.1998**
(21) Anmeldenummer: 97890103.1
(22) Anmeldetag: 18.06.1997
(51) Int. Cl.: B60B 39/08

(54) **Druckluftbetätigte Austragseinrichtung für ein Streugerät**

(30) Priorität: 28.06.1996 AT 1155/96
(71) Anmelder: Goldmann, Norbert, 31832 Springe (DE); Bartling, Werner, 31008 Elze (DE)
(72) Erfinder: Goldmann, Norbert, 31832 Springe (DE); Bartling, Werner, 31008 Elze (DE)
(74) Vertreter: Köhler-Pavlik, Johann, Dipl.-Ing.

(57) **Zusammenfassung**

Die Erfindung betrifft eine druckluftbetätigte Austragseinrichtung 1 für ein Streugerät, vorzugsweise in Form eines Injektors, welche Austragseinrichtung 1 mit einer Zulauföffnung 3 für das Streugut, einer Druckluftzuführung 6, die vorzugsweise in Form einer Düse z.B. in Form einer Injektordüse 7 mündet und einem vorzugsweise gegenüberliegenden Austrittskanal 9. Zur Schaffung einer Austragseinrichtung 1, welche eine Erhöhung der Förderleistung erlaubt und darüberhinaus einfach herzustellen ist, ist die zwischen Zulauföffnung 3 und Austrittskanal 9 gebildete Eintrittsöffnung 8 für das Streugut erfindungsgemäß zumindest teilweise als vorzugsweise ovale Kurve ausgebildet. Strömungstechnisch besondere Vorteile und eine besonders hohe Steigerung der Förderleistung resultieren, wenn die Einströmöffnung 8 ellipsenförmig ausgebildet ist.

## Beschreibung

Die Erfindung betrifft eine druckluftbetätigte Austragseinrichtung für ein Streugerät nach dem Oberbegriff des Anspruches 1.

Derartige Streugeräte sind zum Streuen bzw. Zerstäuben von Streugut, insbesondere von trockenem Sand oder anderen Gleitschutzmitteln unmittelbar vor die Räder von Fahrzeugen, wie z.B. Schienenfahrzeugen oder Lastkraftwagen bestimmt.

Bei bisherigen Lösungen ist nach dem Vorratsbehälter für das Streugut, z.B. für Sand eine sogenannte ,,Sandtreppe" in Art eines Siphons angeordnet, um ein unbeabsichtigtes Ausfließen des Sandes zu verhindern. Zur Austragung des Streugutes wird in den Vorratsbehälter Druckluft eingeblasen, weshalb dieser druckdicht ausgeführt sein muß. Überdies erhöht allenfalls in der Förderleitung zurückgebliebener Sand den Strömungswiderstand und erschwert ein neuerliches Austragen. Feuchtigkeit, die über die Förderleitung auch in den Sandbehälter eindringt, kann zum Ankleben des Sandes in der Leitung und allenfalls zum Verstopfen sowie zum Verklumpen des Sandes im Vorratsbehälter führen.

Durch eine druckluftbetätigte Austragseinrichtung, welche von einer Einrichtung zur Dosierung des Streugutes räumlich getrennt ist, wird erreicht, daß keine Feuchtigkeit in den Vorratsbehälter für das Streugut und in die Förderleitung eindringen kann und der Behälter nicht druckdicht ausgeführt werden muß.

Durch die JP 56 -43004 A ist ein von einer Bedienungskammer gesteuertes Ventil für eine druckluftbetätigte Sandstreueinrichtung bekanntgeworden, bei welcher in der Austragsrichtung gesehen im Anschluß an die Zufuhreinrichtung für das Streugut ein sich schräg nach unten erstreckendes membrangesteuertes Ventil vorgesehen ist, welches an eine seitlich einmündende Druckluftleitung angeschlossen ist.

Aufgabe der Erfindung ist die Schaffung einer Konstruktion für eine solche Austragseinrichtung für ein Streugerät, welche eine Erhöhung der Förderleistung gegenüber der bekannten Austragseinrichtung erlaubt und darüberhinaus einfach herzustellen ist.

Gelöst wird die Aufgabe erfindungsgemäß durch die im kennzeichnenden Teil des Anspruchs 1 angegebenen Merkmale.

Das Streugut wird in der Zulauföffnung der Austragseinrichtung konzentriert vor den eintretenden Druckluftstrahl geleitet. Durch die, insbesondere im Fall einer Injektordüse auftretende hohe Geschwindigkeit der Druckluft entsteht eine Saugwirkung und ein sich kegelförmig ausbreitender Druckluftstrahl, der im Zulaufbereich des Streugutes weitgehend den gesamten Förderquerschnitt erreicht und störungsfrei in die Austrittsöffnung eingeleitet wird. Durch die erfindungsgemäße Geometrie der Einströmöffnung in der Austragseinrichtung wird einerseits eine besonders strömungsgünstige und effektive Förderung und Erfassung des Streugutes mit einer erheblichen Steigerung der Förderleistung gegenüber herkömmlichen Austragseinrichtungen bei gleichem Energieeinsatz und gleicher Baugröße erzielt. Andererseits wird durch die Erfindung eine einfache Herstellung der Austragseinrichtung und somit eine Reduktion der Kosten erreicht.

Besonders vorteilhafte Ausführungsformen der erfindungsgemäßen Konstruktion ergeben sich durch die Merkmale des kennzeichnenden Teils der Patentansprüche 2 und 3.

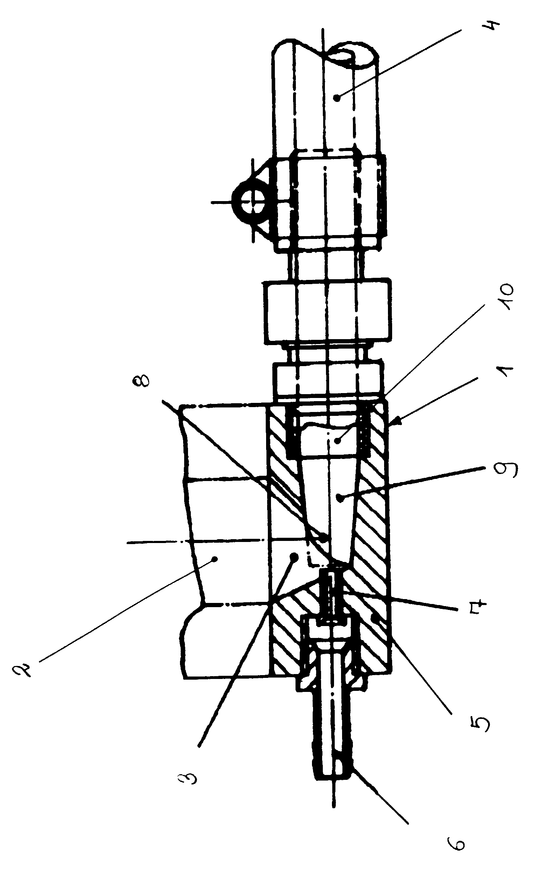

Anhand der beiliegenden Abbildung, welche eine Ausführungsform der erfindungsgemäßen Austragseinrichtung im Querschnitt zeigt, werden die erfindungsgemäßen Merkmale näher erläutert.

Die erfindungsgemäße Austragseinrichtung 1 ist über eine Zuleitung 2 mit einem Vorratsbehälter (nicht dargestellt) für das Streugut, z.B. Sand verbunden. Zwischen dem Vorratsbehälter für das Streugut und der Zuleitung 2 ist üblicherweise eine Dosiereinrichtung zwischengeschaltet. Eine solche Dosiereinrichtung kann z.B. aus einer Dosierkammer und einer Austrittsöffnung, welche durch einen Dosierkolben abgeschlossen ist, bestehen. Normalerweise ist der Kolben unter dem Einfluß einer Feder geschlossen. Durch einen Hubmagnet kann der Dosierkolben entgegen der Kraft der Feder zurückgezogen werden und somit die Austrittsöffnung geöffnet werden. Sodann gelangt das Streugut vom Vorratsbehälter über die Zuleitung 2 und eine vorzugsweise trichterförmige Zulauföffnung 3 in die Austrittseinrichtung 1. Dabei ist ein Öffnungswinkel der trichterförmigen Zulauföffnung 3 von etwa 120° von Vorteil. Zur Förderung des Streugutes wird Druckluft über eine Druckluftleitung 6 und eine anschließende Injektordüse 7 in die Austragseinrichtung 1 eingeblasen. Vorzugsweise gegenüber der Injektordüse 7 ist ein Austrittskanal 9 angeordnet, über den das Streugut durch eine Austrittsöffnung 10 befördert wird. Im dargestellten Ausführungsbeispiel ist der Austrittskanal 9 trichterförmig in Richtung Austrittsöffnung 10 erweitert, wobei sich ein Öffnungswinkel von etwa 15° für die Förderung als besonders vorteilhaft erwiesen hat. Über eine Schlauchleitung 4, Förderleitung oder dgl., welche an die Austrittsöffnung 10 der Austragseinrichtung 1 anschließt, wird das Streugut beispielsweise vor die Räder eines Fahrzeuges (nicht dargestellt) befördert. Die Schlauchleitung 4 ist vorzugsweise aus flexiblem Material, z.B. Kunststoff oder Gummi hergestellt.
Die Austragseinrichtung 1 arbeitet dem Injektorprinzip ähnlich einer Strahlpumpe. Durch die Injektordüse 7 tritt die Druckluft mit hoher Geschwindigkeit (üblich 700 m/s) aus und saugt gemäß dem Strahlpumpenprinzip das Streugut aus der Zuleitung 2 in die Austragseinrichtung 1 an. Der Unterdruck wirkt dabei bis an einen Anschlußflansch der Vorratsbehälters an die Dosiereinrichtung bzw. bis in den Vorratsbehälter hinein und verhindert dadurch eine sogenannte ,,Brückenbildung", sodaß ein ungestörter Nachlauf des Streugutes gewährleistet ist. Gleichzeitig breitet sich der Druckluftstrahl in Richtung Austrittskanal 9 kegelförmig aus. Durch die erfindungsgemäße ellipsenförmige Geometrie der Einströmöffnung 8 zwischen Zulauföffnung 3 und Austrittskanal 9 wird das Streugut strömungstechnisch besonders günstig und effektiv gefördert. Die Ausbildung der Einströmöffnung 8 ist nicht darauf beschränkt, daß sie als ellipsenförmige Kurve ausgebildet ist. Sie kann auch nur teilweise als vorzugsweise ovale Kurve ausgebildet sein. An den Austrittskanal 9 schließt die Austrittsöffnung 10 und eine daran angeschlossene Schlauchleitung 4, Förderleitung oder dgl. an, über welche das Streugut ausgetragen wird. Die Druckluft besorgt sowohl das Transportieren des Streugutes aus dem Vorratsbehälter in die Austragseinrichtung 1 als auch die Förderung des Streugutes aus der Austragseinrichtung 1 beispielsweise vor die Räder eines Fahrzeuges. Dadurch, daß die Druckluft das Streugut nicht gegen die Wandung der Austragseinrichtung 1 drückt, sondern in ihrer Strömung mitsaugt, wird der Verschleiß der Bauteile auf ein Minimum herabgesetzt. Dadurch muß der Vorratsbehälter nicht druckdicht ausgeführt sein und können die Einrichtungen aus leichtem, billigem Material hergestellt werden.

Versuche mit der erfindungsgemäßen Geometrie der Austragseinrichtung haben gegenüber herkömmlichen Konstruktionen eine Steigerung der Förderleistung um etwa 30 % bei gleichbleibendem Energieeinsatz gezeigt.

Üblicherweise erfolgt nach Abschalten des Streugerätes bzw. Schließen der Zufuhr des Streugutes über eine gewisse Zeitspanne die Druckluftzufuhr weiter, damit restliches Streugut aus den Schlauchleitungen 4 ausgetragen wird und die Austragseinrichtung 1 und die Schlauchleitungen 4 vollständig geleert werden.

Im Rahmen der Erfindung können verschiedene konstruktive Veränderungen vorgenommen werden. Theoretisch kann natürlich anstelle von Luft auch ein anderes gasförmiges Medium eingesetzt werden.

## Patentansprüche

1. Druckluftbetätigte Austragseinrichtung für ein Streugerät, vorzugsweise in Form eines Injektors, welche Austragseinrichtung mit einer Zulauföffnung für das Streugut, einer Druckluftzuführung, vorzugsweise in Form einer Düse, z.B. in Form einer Injektordüse und einem gegenüberliegenden Austrittskanal, dadurch gekennzeichnet, daß die zwischen der Zulauföffnung (3) und dem Austrittskanal (9) gebildete Eintrittsöffnung (8) für das Streugut auslaufseitig zumindest teilweise als vorzugsweise ovale Kurve ausgebildet ist.

2. Austragseinrichtung nach Anspruch 1, dadurch gekennzeichnet, daß die Eintrittsöffnung (8) zumindest teilweise ellipsenförmig ausgebildet ist.

3. Austragseinrichtung nach einem der Ansprüche 1 und 2, dadurch gekennzeichnet, daß die Eintrittsöffnung (8) über den gesamten Verlauf ellipsenförmig ausgebildet ist.
